Europäisches Patentamt

European Patent Office

Office européen des brevets

(19)

(11) Publication number: **0 029 653**
**B1**

# EUROPEAN PATENT SPECIFICATION

(45) Date of publication of patent specification: **01.06.83**

(51) Int. Cl.³: **G 01 K 11/20, G 01 K 1/02**

(21) Application number: **80303536.9**

(22) Date of filing: **08.10.80**

(54) **Optical systems for sensing and measuring physical quantities.**

(30) Priority: **21.11.79 GB 7940226**

(43) Date of publication of application:
**03.06.81 Bulletin 81/22**

(45) Publication of the grant of the patent:
**01.06.83 Bulletin 83/22**

(84) Designated Contracting States:
**DE FR IT NL**

(56) References cited:
**FR - A - 2 374 624**
**GB - A - 1 480 583**
**US - A - 4 223 226**

(73) Proprietor: **The General Electric Company, p.l.c.**
**1 Stanhope Gate**
**London W1A 1EH (GB)**

(72) Inventor: **McCormack, John Stephen**
**6 Townsend Court Townsend Lane**
**Kingsbury London N.W.9 (GB)**

(74) Representative: **Kirby, Harold Victor Albert**
**Central Patent Department The General Electric**
**Company Limited Hirst Research Centre East Lane**
**Wembley Middlesex HA9 7PP (GB)**

Courier Press, Leamington Spa, England

## Optical systems for sensing and measuring physical quantities

This invention relates to systems for sensing and measuring physical quantities and more specifically to systems that make such measurements by optical techniques utilising phosphors which are sensitive to the said physical quantities. The term phosphor is intended to refer to any fluorescent compound, that is any compound which emits fluorescent radiation as a result of being irradiated at a different wavelength.

Systems of this kind have been proposed, in particular, for remote sensing, since they have the advantages of noise immunity and safety in chemically unstable environments, they do not require remote power feeding, and are not subject to interference from local electronic installations. Systems have hitherto been considered which involve either the measurement of the absolute power transmitted by an optical fibre at one wavelength and modified by the transducer, or measurement of the rotation of the plane of polarisation of light transmitted by a monomode optical fibre: a system of either of these types would be subject to certain difficulties. Thus the absolute power level would be liable to be altered as a result of attenuation losses in a long length of optical fibre, and/or insertion losses at each connector incorporated in the system. The polarisation measurement technique, although substantially unaffected by optical losses, could give rise to mechanical and optical problems in forming connections with monomode fibres.

U.K. Patent specification No.1,480,583 discloses an optical system for measuring the temperature of a moving body, comprising the phosphor strip applied to said body, a source of exciting light for making the phosphor strip fluoresce and means for measuring the intensity of the fluorescence from the phosphor strip. Modulation of the exciting light is prevented by a control circuit so that the measured intensity of fluorescent emission from the phosphor strip provides a direct indication of the temperature of the moving body.

There is disclosed in U.S. Patent Specification No. 4075493 a temperature measuring system comprising a layer of phosphor material which when excited to luminescence emits detectable radiation within two or more distinct wavelength ranges with a relative intensity of emission in these wavelength ranges varying in a known manner as a function of the temperature of the phosphor.

Such a system has a number of disadvantages. The emissions at different wavelengths are liable to differential refraction and attenuation by the optics of the system which therefore require sophisticated construction in order to be accurate. The apparatus for analysing the emissions in such a system is also necessarily complex.

It is an object of the present invention to provide a system of the kind referred to which enables parameters other than absolute received power or polarisation plane rotation to be measured but which is simpler and obviates the disadvantage of the aforementioned system.

According to the invention as defined in claim 1, an optical system for sensing and measuring a physical quantity comprises a source of modulated exciting electromagnetic radiation, a body of a fluorescent compound which is excitable by the said radiation to emit fluorescent radiation at a wavelength different from that of the exciting electromagnetic radiation, the fluorescent lifetime of the said compound body being dependent on the magnitude of the physical quantity to be sensed, means for directing the exciting electromagnetic radiation from said source onto the body of the fluorescent compound body, said body being disposed to receive the exciting electromagnetic radiation emitted from said source of electromagnetic radiation, and means for detecting and measuring variations in the lifetime of emission of radiation from the fluorescent compound body.

The detecting and measuring means may be calibrated to indicate the magnitude of the said physical quantity on which the fluorescent properties of the fluorescent compound body are dependent. For simplicity, the fluorescent compound body will subsequently be referred to merely as a phosphor.

The decay times of emissions from fluorescent materials are usually shorter than those of phosphorescent materials, and systems in accordance with this invention are advantageous in that their shorter timescale allows more information to be gathered in a given interval with a consequent increase in accuracy.

The means for detecting and measuring variations in the lifetime of emission of radiation from the phoshor preferably determines the phase shift of the emitted radiation relative to the modulated radiation from the source. This phase shift, which may be termed the modulation phase shift, is proportional to the lifetime of the fluorescent emission and the temperature may be conveniently determined from the phase shift by reference to a calibrated scale.

An optical system according to the invention preferably incorporates one or more optical fibres along which either the radiation emitted by the phosphor or the radiation emitted by the source is or both are transmitted to the detecting and measuring means.

Such a system is particularly suitable for remote sensing, since the optical fibre or fibres may be of any length required, and the operation of the phosphor is not affected by any attenuation in the fibre or fibres or insertion losses which may result from the use of connectors in the optical system. Optical fibres of either the monomode or multimode type may be employed; the fibres being preferably composed of silica containing one or more dopants for modifying the refractive index of the silica to impart either a step or a graded refractive index profile to the fibre.

The system may be employed, for example, for measuring temperature or pressure, with an appropriate choice of a phosphor to function as a transducer converting the received radiation to radiation of a different wavelength and having fluorescent properties which vary in respect of the lifetime of the emission, with variations in the applied temperature or pressure. Examples of phosphors suitable for use in a temperature measuring system are barium chlorofluoride activated by divalent samarium, lanthanum aluminate activated with europium and yttrium vanadate. In the case of samarium activated barium chlorofluoride the emission lifetime decreases with increasing temperature. The barium chlorofluoride phosphor is preferred for use with silica optical fibres, since it is excited by radiation in the blue region of the visible spectrum which is efficiently propagated in silica.

The type of radiation source employed will be determined by the wavelength, or range of wavelengths, of the radiation required to excite the particular phosphor used. In some cases, for example if the phosphor is excited by infrared radiation a semiconductor laser or other type of laser may be used; this is a convenient form of light source since the laser output can readily be coupled directly to an optical fibre or fibres. Moreover, for the measurement of the emission lifetime of the phosphor, pulsed excitation of the phosphor is required, and in such cases a laser is a convenient light source since it can be operated to give a pulsed output. However, in most cases the phosphor will be excitable by visible light or ultra violet radiation, and it will therefore be necessary to use a suitable lamp, for example a high pressure mercury vapour or xenon discharge lamp, and to modulate the lamp emission, preferably to produce radiation pulses which are focussed into the end or ends of the optical fibre or fibres.

The fluorescent emission of the phosphor, and variations in its fluorescent properties, may be sensed and measured by any convenient known technique.

The invention will now be further described by way of an example with reference to the accompanying drawings,

Figure 1 of which shows a graph of the relationship between emission lifetime and temperature for a barium chlorofluoride phosphor.

Figure 2 is a schematic representation of an apparatus in accordance with the invention.

Thus, in the specific example of a system according to the invention for measuring temperatures or for sensing temperature changes, there is an optical fibre arrangement which consists of either a single fibre operating in a duplex mode or a pair of monomode fibres for transmitting light to and from the phosphor.

The phosphor employed is barium chlorofluoride (Ba ClF) activated by divalent samarium. This phosphor is excited by pulsed radiation of wavelengths in the approximate range of 300 to 470 nm, and emits radiation in the red and infrared regions of the spectrum. The intensity and lifetime of the emission from the various levels produced by each pulse of exciting radiation decreases with increasing temperature. Measurements can be made up to about 400°C, at which temperature the emission is still detectable. A high pressure xenon arc or mercury vapour lamp may be employed for producing the exciting radiation, and the lamp output is modulated to produce pulsed emission by means of a suitable light chopper, for example a metal disc having a multiplicity of holes arranged in a circle, which is placed between the lamp and the input end or ends of the optical fibre or fibres and is rotated rapidly to give the desired pulse rate. The pulsed light beam is arranged to fall upon a convex lens which is built into the optical fibre termination and by means of which the pulses are focussed into the fibre end or ends.

The phosphor, in a suitable physical form, is disposed in an optical cavity or optical waveguide in which the output end or ends of the optical fibre or fibres terminate, this arrangement being placed in the location at which temperatures are to be measured. The lifetime of the phosphor emission is measured by a phase shift technique which depends upon the fact that the peak of the intensity of each emission pulse is shifted in phase from that of the exciting pulse by an amount proportional to the lifetime of the emission pulse. The temperature corresponding to any measured emission lifetime can be determined from a previously prepared graph, or the measuring apparatus may include an arrangement for applying the measurements to suitable recording or display means calibrated to indicate temperature.

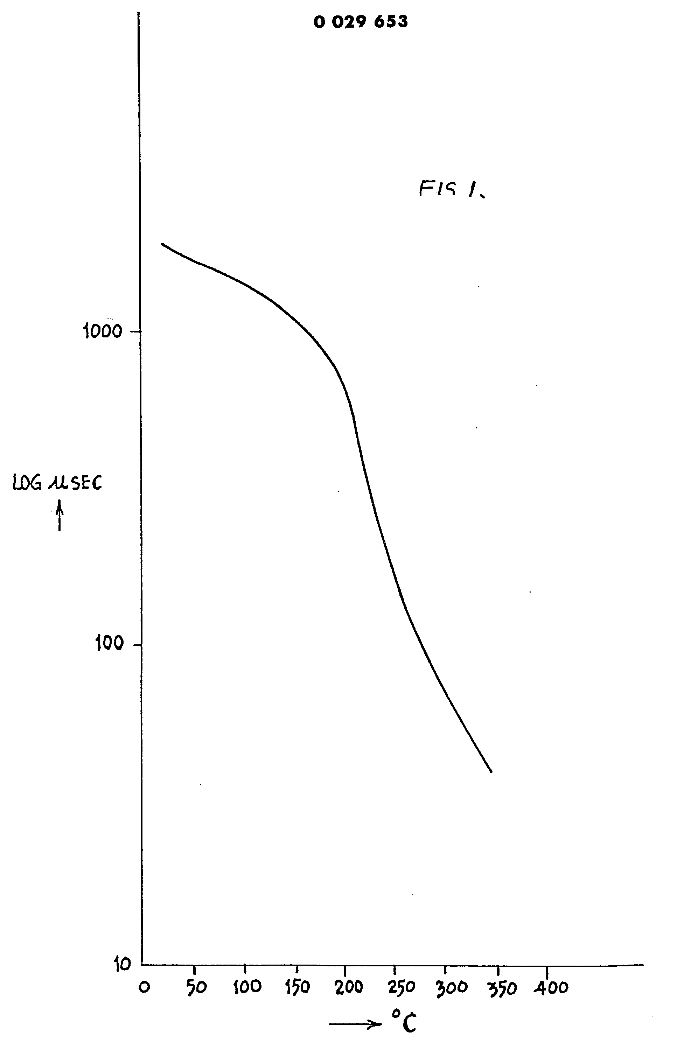

The accompanying drawing, Figure 1, shows a graph of the relationship between emission lifetime and temperature for the above-described barium chlorofluoride phosphor. The graph was drawn by plotting temperature against the logarithm of the lifetime of the $^5D_0$—$^7F$ emission line at wavelength 687.7 nm, excited by blue light of wavelength 417 nm at a pulse rate of 150Hz, the lifetime being measured by the phase shift technique. The emission lifetime is approximately 2 milliseconds at room temperature (20°C), and falls to approximately 50 microseconds at 350°C.

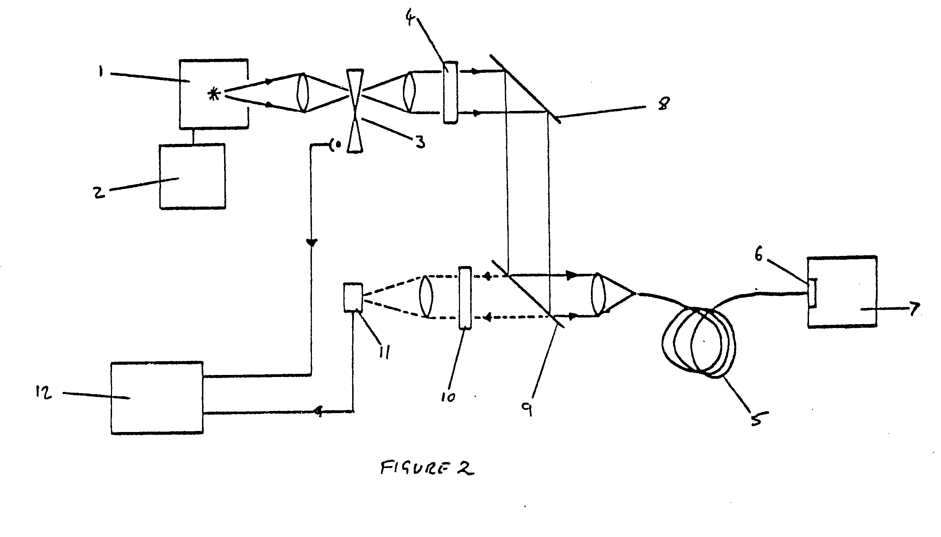

Figure 2 shows an apparatus for measuring temperature in accordance with the invention. The apparatus comprises a tungsten halogene lamp 1 powered by a power supply 2. A rotating perforated disc 3 serves to chop the light into pulses which are then passed through a filter 4 which removes red light of the frequency at which the phosphor fluoresces. Two dichroic mirrors 8, 9 are used to further remove red light from the beam which is then focussed onto the end of an optic fibre 5 leading to the phosphor 6 which in this instance is barium chlorofluoride activated with samarium. The phosphor is contained in a heat cell 7 which is maintained at the temperature to be measured. The red fluorescent emission from the phosphor 6 passes through the dichroic mirror 9, through a red filter 10 to remove any residual exciting radiation, and is focussed onto a silicion detector 11. The phase shift of the fluorescent radiation incident on the detector 11 is determined by a lock-in amplifier 12 with reference to a signal taken from the light chopper 3. The output of the amplifier 12 is a measure of the temperature of the cell 7.

## Claims

1. An optical system for sensing and measuring a physical quantity comprising a source (1) of exciting electromagnetic radiation; a fluorescent compound body (6) which is excitable by said radiation to emit fluorescent radiation at a wavelength different from that of the exciting electromagnetic radiation, a fluorescent property of said compound body being dependent on the magnitude of said physical quantity; means (5, 8, 9) for directing the exciting electromagnetic radiation from said source onto the fluorescent compound body, said body being disposed to receive the exciting electromagnetic radiation emitted from said source; and means for detecting (11) and measuring (12) variations in said fluorescent property in order to determine said physical quantity, characterised in that said source includes means (3) for modulating said exciting electromagnetic radiation and in that the lifetime of emission of said fluorescent radiation constitutes said property.

2. An optical system according to Claim 1 wherein said measuring means (12) measures the modulation phase shift of the emitted fluorescent radiation relative to the modulated exciting electromagnetic radiation from the source (1).

3. An optical system according to Claims 1 or 2 incorporating one or more optical fibres (5) along which either the fluorescent radiation emitted by the fluorescent compound body (6) or the exciting electromagnetic radiation emitted by the source (1) is or both radiations are transmitted to the detecting (11) and measuring means (12).

4. An optical system according to any preceding claim for sensing and measuring either temperature or pressure, the lifetime of emission of the fluorescent radiation from the fluorescent compound body (6) varying in response to changes in temperature or pressure as the case may be.

5. An optical system according to Claim 4 for measuring temperature wherein the luminescent compound body (6) is composed of barium chlorofluoride activated with samarium, or lanthanum aluminate activated with europium, or yttrium vanadate.

6. An optical system according to Claim 3 wherein said source (1) of modulated exciting electromagnetic radiation comprises a semiconductor laser.

7. An optical system according to Claim 3 wherein the fluorescent compound body (6) is disposed within an optical cavity into which an optical fibre end or ends is or are coupled.

8. An optical system according to Claim 3 wherein the fluorescent compound body (6) is incorporated in an optical waveguide which is coupled to the transmitting fibre/or fibres (5).

### Patentansprüche

1. Optisches System zum Erfassen und Messen einer physikalischen Größe, bestehend aus einer Quelle (1) zum Erregen einer elektromagnetischen Strahlung; einem fluoreszierenden Verbundkörper (6), der durch die Strahlung erregbar ist, so daß er Fluoreszenzstrahlung bei einer Wellenlänge emittiert, die sich von derjenigen der anregenden elektromagnetischen Strahlung unterscheidet, wobei eine Fluoreszenzeigenschaft des Verbundkörpers von dem Betrag der physikalischen Größe abhängt; Mitteln (5, 8, 9) zum Richten der erregenden elektromagnetischen Strahlung von der Quelle aus auf den fluoreszierenden Verbundkörper, der derart angeordnet ist, daß er die erregende elektromagnetische Strahlung, die von der Quelle emittiert wird, empfängt; sowie Mitteln zum Erfassen (11) und Messen (12) von Änderungen der fluoreszierenden Eigenschaft, um die physikalische Größe zu bestimmen, dadurch gekennzeichnet, daß die Quelle Mittel (3) zum Modulieren der erregenden elektromagnetischen Strahlung umfaßt und daß die Lebensdauer der Emission der fluoreszierenden Strahlung die Eigenschaft ausmacht.

2. Optisches System gemäß Anspruch 1, dadurch gekennzeichnet, daß die Mittel (12) zum Messen die Modulationsphasenverschiebung der emitterten fluoreszierenden Strahlung im Verhältnis zu der modulierten elektromagnetischen Erregerstrahlung von der Quelle (1) messen.

3. Optisches System gemäß Anspruch 1 oder 2, dadurch gekennzeichnet, daß es eine oder mehrere optische Fasern (5) umfaßt, längs deren entweder die fluoreszierende Strahlung, die von dem fluoreszierenden Verbundkörper (6) emittiert wird, oder die elektromagnetische Erregerstrahlung, die von der Quelle (1) emittiert wird, zu den Mitteln zum Erfassen (11) und Messen (12) übertragen wird oder beide Strahlungen dorthin übertragen werden.

4. Optisches System gemäß einem der vorhergehenden Ansprüche zum Erfassen und Messen von entweder Temperatur oder Druck, dadurch gekennzeichnet, daß die Lebensdauer der Emission der fluoreszierenden Strahlung von dem fluoreszierenden Verbundkörper (6) in Abhängigkeit von den jeweiligen Veränderungen in der Temperatur oder dem Druck variiert.

5. Optisches System gemäß Anspruch 4 zum Messen von Temperaturen, dadurch gekennzeichnet, daß der lumineszierende Verbundkörper (6) aus mit Samarium aktiviertem Bariumchlorofluorid, mit Europium aktiviertem Lanthanaluminat oder Yttriumvanadat besteht.

6. Optisches System gemäß Anspruch 3, dadurch gekennzeichnet, daß die Quelle (1) der modulierten elektromagnetischen Erregerstrahlung aus einem Halbleiterlaser besteht.

7. Optisches System gemäß Anspruch 3, dadurch gekennzeichnet, daß der fluoreszierende Verbundkörper (6) in einem optischen Hohlraum angeordnet ist, in den ein optisches Faserende oder optische Faserenden gekoppelt ist bzw. sind.

8. Optisches System gemäß Anspruch 3, dadurch gekennzeichnet, daß der fluoreszierende Verbundkörper (6) in einen optischen Hohlleiter eingearbeitet ist, der mit der Übertragungsfaser bzw. den Übertragungsfasern (5) gekoppelt ist.

**Revendications**

1. Système optique destiné à détecter et mesurer une quantité physique, comprenant une source (1) d'un rayonnement électromagnétique excitateur, un corps (6) d'un composé fluorescent qui peut être excité par ce rayonnement afin qu'il émette un rayonnement de fluorescence à une longueur d'onde différente de celle du rayonnement électromagnétique excitateur, une propriété de fluorescence du corps du composé dépendant de l'amplitude de ladite quantité physique, un dispositif (5, 8, 9) destiné á diriger le rayonnement électromagnétique excitateur de la source sur le corps du composé fluorescent, ce corps étant placé de manière qu'il reçoive le rayonnement électromagnétique excitateur émis par la source, et un dispositif de détection (11) et de mesure (12) des variations de la propriété de fluorescence afin que ladite quantité physique soit déterminée, caractérisé en ce que la source comporte un dispositif (3) de modulation du rayonnement électromagnétique excitateur, et en ce que la durée de vie d'émission du rayonnement de fluorescence constitue ladite propriété.

2. Système optique selon la revendication 1, caractérisé en ce que le dispositif de mesure (12) mesure le déphasage de la modulation du rayonnement fluorescent émis par rapport au rayonnement électromagnétique excitateur modulé provenant de la source (1).

3. Système optique selon l'une des revendications 1 et 2, comprenant une ou plusiers fibres optiques (5) le long desquelles le rayonnement de fluorescence émis par le corps (6) du composé de fluorescence ou le rayonnement électromagnétique excitateur émis par la source (1) ou ces deux rayonnements sont transmis au dispositif de détection (11) et de mesure (12).

4. Système optique selon l'une quelconque des revendications précédentes, destiné à détecter et mesurer une température ou une pression, la durée de vie d'émission du rayonnement de fluorescence provenant du corps (6) du composé fluorescent variant avec les variations de température ou de pression, selon le cas.

5. Système optique selon la revendication 4, destiné à la mesure de la température, caractérisé en ce que le corps (6) de composé luminescent est composé de chlorofluorure de baryum activé par du samarium, d'aluminate de lanthane activé par de l'europium, ou de vanadate d'yttrium.

6. Système optique selon la revendication 3, caractérisé en ce que la source (1) du rayonnement électromagnétique excitateur modulé est un laser à semi-conducteur.

7. Système optique selon la revendication 3, caractérisé en ce que le corps (6) d'un composé fluorescent est disposé dans une cavité optique dans laquelle une ou plusieurs extrémités de fibre optique doivent être couplées.

8. Système optique selon la revendication 3, caractérisé en ce que le corps (6) de composé fluorescent est incoporé dans un guide d'onde optique qui est couplé à une ou plusieurs fibres (5) de transmission.

0 029 653

FIS 1.

LOG µSEC
↑

1000

100

10

0    50   100  150  200  250  300  350  400

⟶ °C

1

FIGURE 2